# EUROPÄISCHE PATENTSCHRIFT

(11) **EP 4 021 862 B1**
(45) Veröffentlichungstag und Bekanntmachung des Hinweises auf die Patenterteilung: **07.08.2024**
(21) Anmeldenummer: 20760809.2
(22) Anmeldetag: 20.08.2020
(51) Int. Cl.: C02F 11/06, F23G 7/00, B65G 53/10, B65G 53/52, F04C 2/107, F04C 28/24

(54) **VERFAHREN ZUR VERBRENNUNG VON SCHLAMM**
METHOD FOR BURNING SLUDGE
PROCÉDÉ D'INCINÉRATION DE BOUE

(30) Priorität: 29.08.2019 DE 102019123180
(43) Veröffentlichungstag der Anmeldung: 06.07.2022
(73) Patentinhaber: Seepex GmbH, 46240 Bottrop (DE)
(72) Erfinder: MCGARIAN, Peter, Tintinhull, Somerset BA228PD (GB); GENTLE, Andrew, Crewkerne, Somerset TA188JJ (GB)
(74) Vertreter: Andrejewski - Honke Patent- und Rechtsanwälte Partnerschaft mbB
(86) Internationale Anmeldenummer: PCT/EP2020/073336
(87) Internationale Veröffentlichungsnummer: WO 2021/037668

(56) Entgegenhaltungen:
- DE-U1- 202018 101 651
- GB-A- 1 264 768
- JP-A- 2013 112 456

## Beschreibung

Die Erfindung betrifft ein Verfahren zur Verbrennung von (pastösem) Material, z. B. Schlamm, in einer Anlage mit einer Verbrennungseinrichtung, die einen Verbrennungsraum aufweist, und mit einer Beschickvorrichtung, mit der der Verbrennungsraum der Verbrennungseinrichtung mit dem zu verbrennenden Material bzw. Schlamm beschickbar ist.

Schlamm meint im Rahmen der Erfindung insbesondere Klärschlamm, z. B. getrockneten Schlamm bzw. getrockneten Klärschlamm. Dabei handelt es sich um ein pastöses Material bzw. Materialgemisch, das in Kläranlagen im Zuge der Abwasseraufbereitung entsteht. Auf den Kläranlagen wird Abwasser in verschiedenen Reinigungsstufen mechanisch, biologisch und/oder chemisch behandelt und dabei weitestgehend von Schmutz- und Nährstoffen befreit, sodass es z. B. in die Gewässer abgeleitet werden kann. Der übrig bleibende Schlamm wird als Klärschlamm bezeichnet. Er entsteht sowohl in kommunalen als auch in betrieblichen Kläranlagen und kann dort z. B. entwässert, getrocknet oder auf andere Art und Weise behandelt werden. Bei Klärschlamm handelt es sich um ein Vielstoffgemisch, das zum größten Teil aus organischen Substanzen besteht. Der organische Anteil des Klärschlamms kann etwa 45 bis 90 % in der Trockensubstanz betragen. Dieser besteht zum größten Teil aus Bakterienmasse und setzt sich hauptsächlich aus den Elementen Kohlenstoff, Wasserstoff, Sauerstoff, Stickstoff und Schwefel zusammen. Ferner sind im Klärschlamm in der Regel Verunreinigungen durch eine Vielzahl organischer Schadstoffe enthalten. Die Erfindung erfasst aber nicht nur die Verbrennung von Schlamm, sondern auch von anderem pastösen Brennmaterial bzw. Materialgemischen.

Bei der Verbrennung von (getrocknetem) Klärschlamm handelt es sich um eine thermische Behandlung des Klärschlamms in einer Verbrennungseinrichtung. Bei einer solchen Verbrennungseinrichtung handelt es sich insbesondere um einen Ofen. Im Unterschied zur Mitverbrennung des Klärschlamms in z. B. Kohlekraftwerken, Zementwerken und Abfallverbrennungsanlagen bezeichnet man die alleinige Verbrennung als Monoklärschlammverbrennung und die entsprechenden Anlagen als Monoverbrennungsanlagen. Solche werden üblicherweise bei Temperaturen zwischen 850 und 950° C betrieben. Als Verbrennungseinrichtung bzw. Ofen kommt in der Praxis insbesondere ein Wirbelschichtofen zum Einsatz, bei welchem der Schlamm in der Wirbelschicht verbrannt wird. Die Beschickung eines Wirbelschichtofens mit dem Klärschlamm erfolgt in der Praxis durch einen Wurfbeschicker, der wiederum mit einer Exzenterschneckenpumpe kontinuierlich beliefert werden kann. Bei der Einbringung der Schlämme in den Verbrennungsofen bildet der Schlamm in der Regel verhältnismäßig große Partikel bzw. Brocken. Die Partikelgröße kann sich ungünstig auf den Wirkungsgrad der Verbrennung auswirken.

Die Klärschlammverbrennung ist z. B. aus der US 4 335 663 bekannt. Das zu verbrennende Material wird zur Optimierung der Verbrennung in einen fein zerteilten Zustand überführt bzw. zerstäubt, und zwar mittels Druckluft.

Aus der JP2013112456 A ist ein Druckzuführungssystem für ein viskoses Material wie Schlamm bekannt, das in der Lage ist, ein hochviskoses Material über eine lange Strecke mit einer geringen Leistung unter geringe Druck zuzuführen.

Die GB1264768 offenbart ein alternatives Verfahren zur Beförderung und Verbrennung von Schlamm.

Aus der US 8 282 772 B2 ist außerdem ein Verfahren zur Behandlung von Abwasser bekannt, bei welchem eine Exzenterschneckenpumpe zum Einsatz kommt.

Die AT 510 511 A1 beschreibt im Übrigen eine Vorrichtung zur Einbringung von Biomaterial in einen Brenn- oder Vergaserraum, mit einem mit einer Zuführeinrichtung für Biomaterial ausgestatteten Druckrohr, in welchem ein Druckstempel gegen den Brenn- oder Vergaserraum hin- und herbewegbar geführt ist. Dabei wird der Druckstempel gegen eine Druckschleuse zum Brenn- oder Vergaserraum unter Bildung eines Druckstopfens aus Biomaterial geführt, der gegen den Brennraum, vorzugsweise durch eintretende Hydrolyse oder dadurch Verklebung sowie Kompaktierung des Biomaterials, abgedichtet.

Schließlich befasst sich die WO 2018/002330 A1 mit einem Spaltofen zur Produktion von Spaltgasen (z. B. Ethylen), der mit einem speziell ausgestalteten Pyrolyserohr für den Transport eines Fluides ausgerüstet ist.

Ausgehend von dem vorbekannten Stand der Technik liegt der Erfindung die Aufgabe zugrunde, ein Verfahren für eine verbesserte Verbrennung von Schlamm, insbesondere von getrocknetem Klärschlamm zu schaffen.

Zur Lösung wird das im Anspruch 1 definierte Verfahren vorgeschlagen.

Die Erfindung geht von der Erkenntnis aus, dass bei der thermischen Behandlung von pastösem Material (z. B. Schlamm), insbesondere getrocknetem Klärschlamm (z. B. im Sinne einer Klärschlammmonoverbrennung) die herkömmliche Beschickung des Ofens mit einem Wurfbeschicker nachteilig ist, da auf diese Weise verhältnismäßig große Partikel eingebracht werden, die den Wirkungsgrad der Verbrennung negativ beeinflussen. Erfindungsgemäß werden der Transport des Schlamms und die Beschickung des Ofens in einer pneumatischen Förder- und Beschickvorrichtung kombiniert, die nach dem Schlammpfropfenprinzip arbeitet. Durch Kombination einer Exzenterschneckenpumpe und einer sogenannten pneumatischen Dichtstromförderung lässt sich pastöses Material, das heißt hochviskose Flüssigkeiten bzw. Medien und insbesondere Schlamm wirtschaftlich und effizient auch über große Distanzen transportieren, ohne dass besonders große Exzenterschneckenpumpen zum Einsatz kommen müssen. Das Material (z. B. der Schlamm) wird mit der Exzenterschneckenpumpe unter Bildung eines verdichteten (kontinuierlichen) Materialstrangs unmittelbar in die Förderleitung gepresst. Mit der in die Förderleitung integrierten Druckmedienzufuhr werden in zeitlichen Abständen Druckpulse in die Förderleitung injiziert und damit Materialpfropfen von dem Materialstrang abgetrennt und diese Materialpfropfen werden mit Hilfe der Druckpulse bzw. des in der Förderleitung entstehenden Druckes in der Förderleitung entlang der Förderrichtung (beabstandet zueinander) transportiert, und zwar bis in die Verbrennungseinrichtung. Dabei erfolgt keine dauerhafte Beaufschlagung der Förderleitung mit Druckmedium, z. B. Druckluft, sondern es werden lediglich in der Förderleitung die beschriebenen Druckpulse erzeugt, die aufgrund der Konstruktion grundsätzlich sowohl in Förderrichtung als auch entgegen der Förderrichtung und folglich in Richtung der Pumpe wirken. Da sich die Exzenterschneckenpumpe jedoch durch eine geschlossene Dichtlinie auszeichnet und das Material aus der Exzenterschneckenpumpe komprimiert und folglich unter Druck in die Förderleitung gedrückt wird, können die in die Förderleitung eintretenden Druckpulse lediglich in Förderrichtung "ausweichen" und damit die entstehenden Materialpfropfen - unterstützt durch die Wirkung der Exzenterschneckenpumpe - in Förderrichtung transportieren.

Eine derartige Einrichtung zur Förderung von pastösem Material im Sinne einer Schlammpfropfen-Förderung ist aus der DE 20 2018 101 651 U1 bekannt und die Erfindung greift auf die darin beschriebenen Erkenntnisse zurück. Erfindungsgemäß wird durch eine derartige Einrichtung die aus dem Stand der Technik bekannte, nachteilige Wurfbeschickung eines Verbrennungsofens ersetzt, da der Schlamm mit Hilfe der Druckluftförderung in Kombination mit der Exzenterschneckenpumpe nicht nur über große Distanzen gefördert werden kann, sondern auf diese Weise auch pneumatisch in die Verbrennungseinrichtung gedrückt werden kann. Insofern können einerseits der Transport des Schlamms über größere Distanz und andererseits die Beschickung des Ofens unmittelbar miteinander kombiniert werden, sodass eine zwischenzeitliche Deponierung (vor der Beschickung) nicht mehr erforderlich ist. Die thermische Behandlung bzw. Verbrennung, z. B. Klärschlammmonoverbrennung, erfolgt bevorzugt direkt auf der Kläranlage, wobei der Prozess über die pneumatische Förderleitung ohne Weiteres an die erforderlichen Distanzen angepasst werden kann. Denn auf die erfindungsgemäße Weise lassen sich die pastösen Medien (z. B. der Klärschlamm) über große Entfernungen transportieren. Die Länge der Förderleitung beträgt vorzugsweise mehr als 25 m, z. B. mehr als 50 m, insbesondere mehr als 100 m, besonders bevorzugt mehr als 200 m. Endseitig ist an die Förderleitung die Verbrennungseinrichtung angeschlossen, sodass Transport und Verwertung in der beschriebenen Weise miteinander kombiniert sind. Die Material- bzw. Schlammpfropfenförderung ist erfindungsgemäß auch deshalb vorteilhaft, weil der Schlamm auf diese Weise nicht in einem kontinuierlichen Strang, sondern in einzelnen, verhältnismäßig kleinen Pfropfen dem Ofen zugeführt wird. Auf diese Weise wird die Oberfläche des Schlamms beim Eintritt in den Ofen im Vergleich zu einer herkömmlichen Wurfbeschickung erhöht. Der Schlamm wird folglich durch die Förderungsmethode zugleich reaktiver, sodass eine effiziente Verbrennung erfolgen kann. Durch die größere Oberfläche, die sich bereits durch die Fördermethode ergibt, wird die Verbrennung beschleunigt. Eine zusätzliche Zerkleinerung ist nicht mehr erforderlich. Da über den Transport zugleich auch die Beschickung erfolgt, kann außerdem auf den herkömmlichen Wurfbeschicker verzichtet werden, sodass die in dem Verfahren benutzte Anlage auch einfach aufgebaut ist. Grundsätzlich liegt es im Rahmen der Erfindung, dass die in der Förderleitung erzeugten Schlammpfropfen in Pfropfenform (vollständig) bis zum Ende der Förderleitung in den Verbrennungsraum transportiert werden. Alternativ kann es jedoch innerhalb der Förderleitung (nach und nach) zu einer (gewissen) Auflösung bzw. Dispergierung der Pfropfen kommen, so dass die Pfropfen in der Förderleitung transportiert und gegebenenfalls dispergiert werden und damit eine disperse Beschickung der Verbrennungseinrichtung erfolgt. In diesem Fall wird in der Förderleitung zumindest im hinteren Bereich eine diskontinuierliche Flugförderung realisiert.

Als Verbrennungseinrichtung kommt insbesondere ein Verbrennungsofen zum Einsatz. Bevorzugt handelt es sich um einen Wirbelschichtofen, bei dem die Verbrennung des Materials bzw. Schlamms in einer Wirbelschicht aus einem heißen Bettmaterial (z. B. Quarzsand) erfolgt. Brennstoff (Schlamm) einerseits und (chemisch inertes) Bettmaterial andererseits werden zusammen, durch die Zugabe eines Fluidisierungsmediums, z. B. Luft, in der Schwebe gehalten und damit fluidisiert. Die zerkleinerten Brennstoffpartikel haben eine große Oberfläche, sodass ein guter Ausbrand erfolgen kann.

Alternativ können jedoch auch Verbrennungseinrichtungen anderer Art verwendet werden, z. B. ein Etagenofen, Etagenwirbelofen oder eine Rostfeuerung.

Grundsätzlich kann erfindungsgemäß auf die in der DE 20 2018 101 651 U1 beschriebenen Erkenntnisse zu einer Anlage und einem Verfahren zur Förderung von pastösem Material zurückgegriffen werden.

Erfinderungsgemäß wird eine Förderleitung verwendet, die einen Innenduchmesser von maximal 50mm, z. B. 30 mm bis 50 mm, aufweist.

Außerdem wird die Dichtstromförderung mit einem Druck von zumindest 4 bar, vorzugsweise zumindest 6 bar, realiziert.

So kann z. B. ein Druck von 4 bis 12 bar, bevorzugt 6 bis 12 bar eingesetzt werden.

Insgesamt wird das System so parametrisiert, dass die geförderten Schlammpfropfen möglichst klein werden, und zwar bevorzugt durch kurze Druckluftinjektionsintervalle, dünne Leitung und/oder hohen Druck. Auf diese Weise wird die Oberfläche des Schlamms beim Eintritt in den Wirbelschichtofen im Vergleich zur Wurfbeschickung deutlich erhöht und damit wird der Schlamm besonders reaktiv. Charakteristisch ist die pulsierende, diskontinuierliche Einleitung von Druckluft. Darauf wird in der Figurenbeschreibung näher eingegangen.

Es kann dabei vorteilhaft sein, nicht nur eine einzige Druckmedienzufuhr vorzusehen, bzw. nicht nur an einer Stelle bzw. an einem Ventil ein Druckmedium in die Förderleitung zu injizieren, sondern optional besteht auch die Möglichkeit, Druckpulse an mehreren Stellen und insbesondere mehreren über die Länge der Förderleitung verteilten Stellen in die Förderleitung zu injizieren, z. B. über mehrere Ventile, die über die Länge der Förderleitung verteilt sind.

Bevorzugt ist an die Förderleitung eine Druckmesseinrichtung angeschlossen.

Außerdem weist die in dem Verfahren benutzte Anlage bevorzugt eine Steuereinrichtung auf, die vorzugsweise einerseits mit dem Ventil der Druckmedienzufuhr und andererseits mit der Druckmesseinrichtung verbunden ist, sodass mit der Steuereinrichtung das Ventil in Abhängigkeit von dem mit der Druckmesseinrichtung gemessenen Druck in der Förderleitung steuerbar ist. Im Betrieb wird folglich das pastöse Material (z. B. der Schlamm) mit der Exzenterschneckenpumpe in der Druckleitung (vor)verdichtet, sodass der mit der Druckmesseinrichtung gemessene Druck in der Förderleitung nach und nach ansteigt. Beim Erreichen oder Überschreiten eines vorgegebenen Druckschwellwertes, der z. B. in der Steuereinrichtung hinterlegt sein kann, wird das Ventil geöffnet und der auf diese Weise in die Förderleitung injizierte Druckpuls trennt den Schlammpfropfen ab und fördert ihn entlang der Förderrichtung durch die Förderleitung. Während der Druckmedieninjektion steigt der Druck kurzzeitig an, sinkt dann jedoch mit dem Abtrennen des Schlammpfropfens sofort wieder ab. Durch das erneute kontinuierliche Zuführen des Materials mit der Exzenterschneckenpumpe steigt der Druck in der Förderleitung (langsam) wieder an, bis eine weitere Druckmedieninjektion erfolgt. In Abhängigkeit von den Eigenschaften des Schlamms kann es vorteilhaft sein, die Förderung durch eine gleichzeitige Gleitmittel- bzw. Schmiermittelinjektion zur Reduzierung der Rohrreibung zu unterstützen. In der Regel kann auf eine in der DE 20 2018 101 651 U1 beschriebene Polymerinjektion verzichtet werden. Es liegt jedoch ebenfalls im Rahmen der Erfindung, ein Hilfsmittel, z. B. Schmierhilfsmittel (z. B. Altöl, Wasser, Polymer oder dergleichen) einzusetzen. Dazu kann optional an die Förderleitung eine solche Gleitmittelzufuhr angeschlossen sein, und zwar vorzugsweise zwischen der Exzenterschneckenpumpe und der Druckmedienzufuhr (bzw. der Mündung der Zufuhr in die Förderleitung). Mit dieser Hilfsschmiermittelzufuhr (vor der Druckmedienzufuhr) kann vorzugsweise kontinuierlich oder quasi kontinuierlich ein Hilfsmittel/Schmierhilfsmittel oder Gleitmittel in die Druckleitung bzw. in den Bereich des Materialstrangs injiziert werden.

Bevorzugt ist die Exzenterschneckenpumpe als Trichterpumpe ausgebildet, wobei an die Einfüllöffnung ein Einfülltrichter angeschlossen ist. Bei einer solchen Trichterpumpe ist bevorzugt vorgesehen, dass die Kuppelstange welche zwischen Antrieb und Rotor angeordnet ist und die Exzentrität realisiert, mit Förderwerkzeugen ausgerüstet ist, z. B. mit einer Förderschnecke oder mit Paddeln oder dergleichen.

Optional kann die Exzenterschneckenpumpe mit einer Zerkleinerungsvorrichtung für das Material ausgerüstet sein. Dieses ist dann vorteilhaft, wenn das Material, das der Exzenterschneckenpumpe zugeführt wird, vor der Druckluftförderung gegebenenfalls vor dem Transport durch die Pumpe noch zerkleinert werden soll. Eine solche Zerkleinerungsvorrichtung, die auch als Maccerator bezeichnet wird, kann z. B. in die Exzenterschneckenpumpe integriert sein, vorzugsweise vor dem Stator/Rotor angeordnet sein.

Optional kann die Förderleitung an die Auslassöffnung der Exzenterschneckenpumpe über ein Adapterstück oder Zwischenstück (ein sogenanntes "Spool-Piece") angeschlossen sein, an welches die Druckluftleitung (und gegebenenfalls die Hilfsmittel- bzw. Gleitmittelzufuhr) angeschlossen ist. Dieses Adapterstück kann funktionell einen Teil der Förderleitung und zugleich den Übergang von der Exzenterschneckenpumpe zu der Förderleitung bilden. Konstruktiv kann es sich um ein separates Adapter- bzw. Zwischenstück handeln, dass endseitig an die Exzenterschneckenpumpe angeschlossen ist und damit den eingangsseitigen Teil der Förderleitung bildet. Insofern kann ein verhältnismäßig kurzes Adapterstück als Anschlussstück für die Druckluftleitung und gegebenenfalls die Hilfsmittelzufuhr vorgesehen sein, welches den Teil der Zuführleitung bildet, an den die Druckluftleitung und gegebenenfalls die Hilfsmittelzufuhr angeschlossen sind.

Von besonderer Bedeutung ist die Tatsache, dass über die Schlammpfropfenförderung sowohl eine Förderung als auch eine Beschickung des Ofens erfolgt, das heißt der Schlamm wird über die Förderleitung in den Ofenraum eingedrückt bzw. eingeblasen. Dazu kann die Förderleitung in bevorzugter Weiterbildung mittels einer (endseitigen) Zuführlanze an die Verbrennungseinrichtung angeschlossen sein. Eine solche Zuführlanze ragt bevorzugt (um ein vorgegebenes Maß) in den Verbrennungsraum hinein, sodass eine besonders effiziente pneumatische Beschickung des Ofens möglich wird. Das Ende bzw. der endseitige Auslass der Förderleitung bzw. der Zuführlanze kann unterschiedliche Querschnittsformen und Querschnittsverläufe aufweisen. Das Ende bzw. dessen Querschnitt kann so ausgestaltet sein, dass eine möglichst starke Zerkleinerung des aus dem Austrittsende austretenden Schlamms erzielt wird. Es kann bereits in der Förderleitung zu einer Dispergierung der Materialpfropfen kommen, so dass das Material nicht zwingend in Pfropfenform aus dem Austrittsende austritt, sondern gegebenenfalls in dispergierter Form, so dass dann eine disperse Beschickung der Verbrennungseinrichtung erfolgt.

Die Förderleitung kann unmittelbar in den Verbrennungsraum münden und um ein vorgegebenes Maß in den Verbrennungsraum hineinragen. Es kann sich aber auch um ein separates, endseitig an die Förderleitung angeschlossenes Teil handeln, dass als Zuführlanze bezeichnet wird und funktionell den endseitigen Abschluss der Förderleitung bildet. Die Zuführlanze kann auch integraler Bestandteil der Förderleitung sein und insoweit den Teil der Leitung bilden, der in den Verbrennungsraum hineinragt.

Im Folgenden wird die Erfindung anhand von Zeichnungen erläutert, die lediglich ein Ausführungsbeispiel darstellen. Es zeigen
- Fig. 1: eine Anlage in einer vereinfachten Ansicht

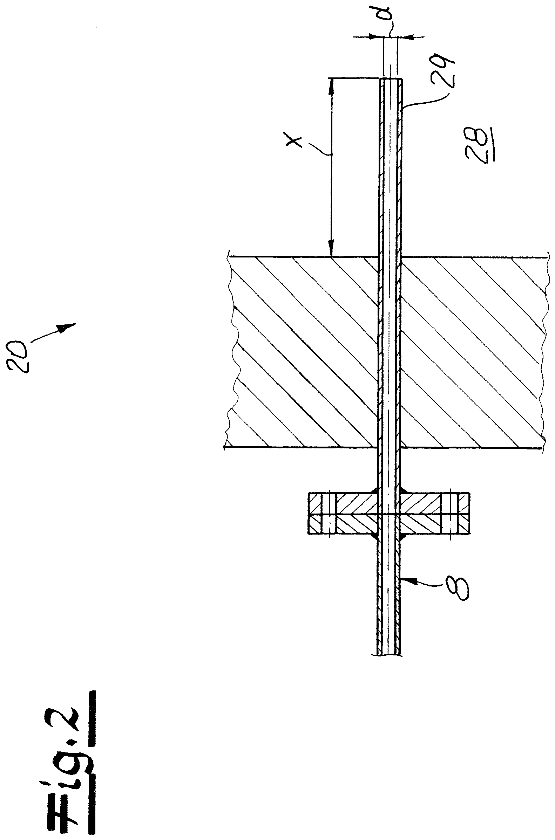

- Fig. 2: einen Ausschnitt aus der Anlage nach Fig. 1,
- Fig. 3: verschiedene Zuführlanze für eine Anlage nach Figuren 1 und 2,
- Fig. 4: eine Exzenterschneckenpumpe der Anlage nach Fig. 1 mit einem optional einsetzbaren Zwischenstück.

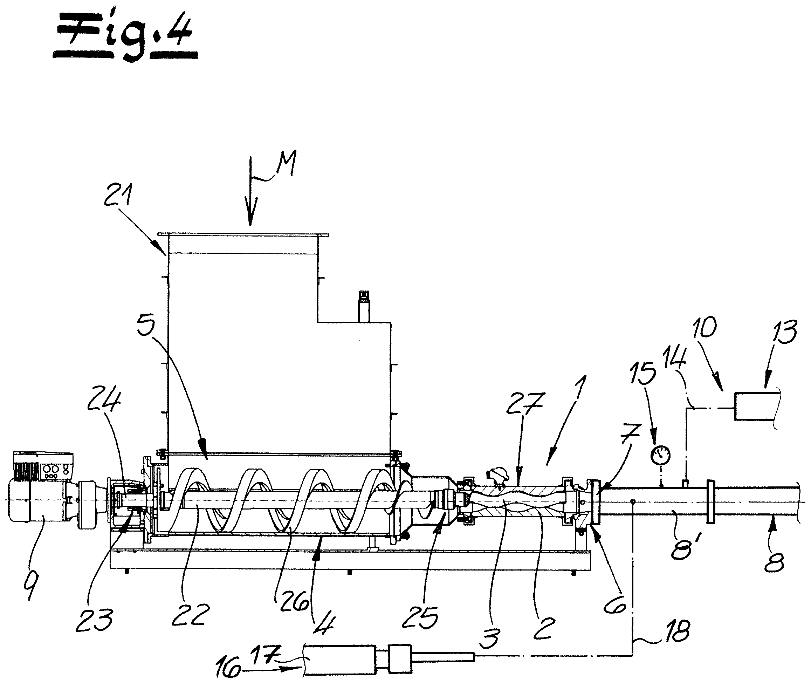

In den Figuren ist eine Anlage zur Verbrennung von Brennmaterial, z. B. von Schlamm, insbesondere von Klärschlamm, dargestellt. Die Anlage weist eine Verbrennungseinrichtung 20 auf, die einen Verbrennungsraum 28 aufweist. Ferner weist die Anlage eine Beschickvorrichtung B auf, mit der der Verbrennungsraum 28 der Verbrennungseinrichtung 20 mit dem zu verbrennenden Schlamm beschickt wird. Die Beschickvorrichtung B ist als pneumatische (Schlammpfropfen-)Förder- und Beschickvorrichtung ausgebildet, das heißt es handelt sich um eine pneumatisch arbeitende Beschickvorrichtung, mit der der Schlamm in Pfropfenform gefördert und pneumatisch in den Verbrennungsraum 28 gedrückt wird. Diese pneumatische Förder- und Beschickvorrichtung B weist eine Exzenterschneckenpumpe 1 auf, die einen Stator 2 (aus elastischem Material) und einen in dem Stator rotierenden Rotor 3 aufweist. Ferner weist die Exzenterschneckenpumpe ein saugseitig an den Stator angeschlossenes Sauggehäuse 4 mit einer Einfüllöffnung 5 und ein druckseitig an den Stator angeschlossenes Druckgehäuse 6 mit einer Auslassöffnung 7 auf. Die Pumpe ist mit einem Antrieb 9 für den Rotor 3 versehen. Weitere Einzelheiten zum Aufbau einer solchen Exzenterschneckenpumpe 1 werden im Folgenden noch anhand der Fig. 4 erläutert.

Die Beschickvorrichtung B weist ferner eine an die Auslassöffnung 7 der Exzenterschneckenpumpe 1 (unmittelbar) angeschlossene pneumatische Förderleitung 8 auf. Diese Förderleitung 8 ist derart an die Auslassöffnung 7 bzw. an das Druckgehäuse 6 angeschlossen, dass das zu fördernde Material M (nämlich der Klärschlamm) mit der Exzenterschneckenpumpe 1 als verdichteter Materialstrang in die Förderleitung gedrückt wird. An die Förderleitung 8 ist außerdem über ein Ventil 11 eine Druckmedienzufuhr 10 angeschlossen, die im Beispiel als Druckluftzufuhr 10 ausgebildet ist, mit der in zeitlichen Abständen Druckpulse in die Förderleitung 8 injizierbar sind. Mit diesen Druckpulsen sind von dem komprimierten Materialstrang Materialpfropfen MP begrenzter Länge abtrennbar und durch die Förderleitung 8 transportierbar. Darauf wird im Folgenden noch näher eingegangen.

Die Förderleitung 8 ist mit ihrem Ende zur Beschickung der Verbrennungseinrichtung 20 mit dem Schlamm bzw. den Schlammpfropfen an den Verbrennungsraum 28 der Verbrennungseinrichtung 20 angeschlossen, das heißt sie mündet in den Verbrennungsraum 28. Damit wird der der Exzenterschneckenpumpe 1 zugeführte Klärschlamm M durch die Exzenterschneckenpumpe 1 und die Förderleitung 8 pneumatisch in Pfropfenform in den Verbrennungsraum 28 des Ofens 20 transportiert und eingeblasen. Wie bereits erwähnt kann es bereits in der Förderleitung zu einer Auflösung der Materialpfropfen kommen, so dass diese im Sinne einer diskontinuierlichen Flugförderung in dispergierter Form in die Verbrennungseinrichtung eintreten.

An die Förderleitung 8 ist eine Druckmesseinrichtung 15 angeschlossen. Sowohl die Druckmesseinrichtung als auch das Druckluftventil 11 sind bevorzugt mit einer nicht dargestellten Steuereinrichtung verbunden. Die Druckmedienzufuhr 10 kann einen Kompressor 12, einen Windkessel 13 und eine Druckluftleitung 14 aufweisen.

Die Exzenterschneckenpumpe 1 ist im Beispiel als Trichterpumpe ausgebildet, wobei an die Einfüllöffnung 5 ein Einfülltrichter 21 angeschlossen ist. Einzelheiten sind in Fig. 4 dargestellt, auf die im Folgenden noch eingegangen wird.

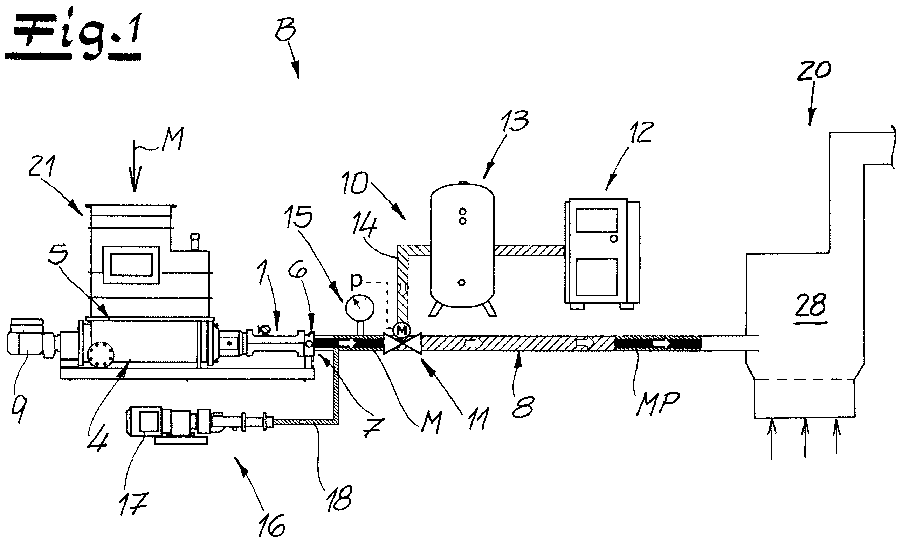

Die Anlage gemäß Fig. 1 wird wie folgt betrieben:
Die Exzenterschneckenpumpe 1 wird über den Trichter 21 mit dem zu fördernden Material, nämlich mit dem zu verbrennenden Klärschlamm beschickt. Der Schlamm M wird mittels der Trichterpumpe 1 in die Förderleitung bzw. Druckleitung 8 verdichtet. Im Zuge des verdichteten Zuführens des Schlamms in die Förderleitung 8 steigt der mit der Druckmesseinrichtung 15 überwachte Druck in der Förderleitung 8 nach und nach an. Bei Erreichen oder Überschreiten eines vordefinierten Druckschwellwertes wird durch Öffnen des Ventils 11 ein Druckluftpuls in die Förderleitung injiziert und dadurch von dem verdichteten Materialstrang ein Materialpfropfen bzw. Schlammpfropfen MP begrenzter Länge abgetrennt und durch die Förderleitung 8 transportiert. Auf diese Weise fällt der Druck in der Förderleitung wieder und der beschriebene Prozess beginnt von vorne. Durch die beschriebene Vorgehensweise werden von dem verdichteten Materialstrang nach und nach Schlammpfropfen begrenzter Länge abgetrennt und durch die Förderleitung 8 transportiert. Diese Schlammpfropfen werden aus der Förderleitung 8 pneumatisch unmittelbar in den Verbrennungsraum 28 des Ofens 20 gedrückt. Insgesamt gelingt damit eine Verbrennung von z. B. Klärschlamm direkt auf der Kläranlage, wobei die Anlage über die pneumatische Förderleitung 8 an die erforderlichen Distanzen angepasst werden kann. Da der Schlamm in verhältnismäßig kleinen Pfropfen pneumatisch dem Ofen 20 zugeführt wird, wird die Oberfläche des Schlamms bei Eintritt in den Ofen 20 im Vergleich zu einer herkömmlichen Wurfbeschickung erhöht. Der Schlamm wird folglich durch die Förderungsmethode reaktiver, sodass eine effektive Verbrennung in dem Ofen 20 erfolgen kann, ohne dass eine zusätzliche Zerkleinerung erforderlich ist. Bevorzugt erfolgt noch innerhalb der Förderleitung oder gegebenenfalls am Austrittsende der Förderleitung in den Verbrennungsofen eine Auflösung bzw. Dispergierung der Materialpfropfen, so dass das Material ohne zusätzliche, aktive Zerkleinerung dispers in den Ofen eintritt.

Bei dem Verbrennungsofen 20 handelt es sich insbesondere um einen Wirbelschichtofen, mit dem die Verbrennung des Schlamms in einer Wirbelschicht aus einem heißen Bettmaterial (z. B. Quarzsand) erfolgt. Einzelheiten sind in den Figuren nicht dargestellt, da auf einen herkömmlichen Wirbelschichtofen 20 zurückgegriffen werden kann, der lediglich im Bereich des Einlasses konstruktiv an die Beschickvorrichtung angepasst werden muss, da die Förderleitung 8 (unmittelbar) an den Ofen anzuschließen ist.

Optional kann die Anlage mit einer in Fig. 1 ebenfalls dargestellten Schmiermittelzufuhr 16 ausgerüstet sein. Es ist erkennbar, dass an die Förderleitung 8 eine Schmiermittelzufuhr bzw. Gleitmittelzufuhr 16 angeschlossen ist, die im Beispiel eine Pumpe 17 und eine Leitung 18 umfasst. Die Gleitmittelzufuhr bzw. der Anschluss der Gleitmittelzufuhr 16 an die Förderleitung ist zwischen der Exzenterschneckenpumpe und der Druckluftzufuhr 10 bzw. des Anschlusses der Druckluftzufuhr an die Förderleitung 8 angeordnet. Mit Hilfe dieser Gleitmittelzufuhr 16 kann ein Gleitmittel, z. B. eine Polymerlösung in die Druckleitung 8 bzw. in dem Bereich des Materialstrangs injiziert werden.

Wie bereits erwähnt ist die Exzenterschneckenpumpe in dem Beispiel bevorzugt als Trichterpumpe ausgebildet. Ein Beispiel einer Exzenterschneckenpumpe ist in Fig. 4 dargestellt. Der Antrieb 9 arbeitet über eine Kuppelstange 22 auf den Rotor 3, wobei die Kuppelstange 22 im Beispiel mit einem Förderwerkzeug 26, z. B. einer Schnecke, versehen ist, um die Förderung des Materials in den Bereich des Rotors bzw. des Stators zu unterstützen. Die Kuppelstange 22 ist über ein eingangsseitiges Gelenk 23 an den Antrieb bzw. eine Antriebswelle oder Verbindungswelle 24 und über ein rotorseitiges Gelenk 25 an den Rotor 2 angeschlossen, sodass über die Kuppelstange 22 und die Gelenke 23, 24 die exzentrische Bewegung des Rotors 3 ermöglicht bzw. realisiert wird.

Die Exzenterschneckenpumpe 1 kann dabei als sogenannte Easy-Maintenance-Pumpe ausgebildet sein, bei der sich sowohl der Stator 2 als auch der Rotor 3 ohne Entfernen des Sauggehäuses 4 und ohne Entfernen des Druckstutzens 6 bzw. der angeschlossenen Leitung und insbesondere auch ohne Entfernen des Trichters 21 austauschen lassen. Dazu ist im Beispiel der Stator 2 als längsgeteilter Stator ausgebildet, der aus z. B. zwei Statorhälften besteht. Einzelheiten sind nicht dargestellt. Der dem elastomeren Stator umgebende Statormantel 27 besteht bevorzugt aus mehreren Mantelsegmenten, die zum einen eine Statorspannvorrichtung bilden und zum anderen eine einfache Demontage aus einem einfachen Statoraustausch ermöglichen. Außerdem kann der Rotor 3 über eine zusätzliche Trennstelle an das rotorseitige Kupplungsgelenk angeschlossen sein, sodass sich der Rotor 3 ohne Gelenktrennung austauschen lässt. Auch dazu sind Einzelheiten nicht dargestellt. Es kann jedoch insgesamt auf die in der DE 10 2010 037 449 B4, DE 10 2014 112 550 B4, DE 10 2014 112 552 B4 oder DE 10 2008 021 920 A1 bekannten Konzepte zurückgegriffen werden.

Bezüglich der Schlammpfropfen-Förderung kann insgesamt auf die in der DE 20 2018 101 651 U1 beschriebene Technologie zurückgegriffen werden. Erfindungsgemäß steht die Verwendung einer derartigen Schlammpfropfen-Förderung innerhalb einer Anlage zur Verbrennung von Schlamm im Vordergrund.

Die Förderleitung der im erfinderischen Verfahren benutzten Anlage weist eine Innendurchmesser von maximal 50 mm auf In dem in Fig. 4 dargestellten Beispiel ist endseitig an die Auslassöffnung der Exzenterschneckenpumpe ein Adapterstück 8', ein sogenanntes "Spool Piece", angeschlossen, an welches die Druckluftleitung und optional die Gleitmittelzufuhr angeschlossen sind. Dieses Adapterstück 8' dient der Verbindung der Exzenterschneckenpumpe 1 mit der Förderleitung 8, sodass das Adapter- bzw. Zwischenstück 8' den Anfangsbereich der Förderleitung 8 bildet. Der Auslass der Exzenterschneckenpumpe ist folglich unmittelbar an die Förderleitung, z. B. an das Adapterstück 8' der Förderleitung angeschlossen.

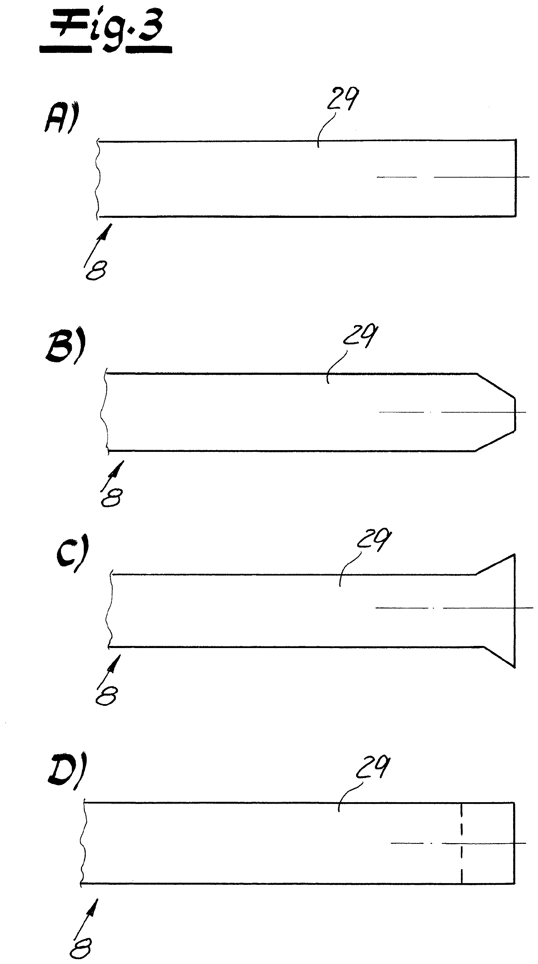

Wie bereits erwähnt mündet die Förderleitung 8 in den Verbrennungsraum 28 des Ofens 20. In dem dargestellten Beispiel erfolgt dieses über eine Zuführlanze 29, die um ein vorgegebenes Maß x in den Verbrennungsraum hineinragt. Diese Zuführlanze 29 bildet folglich das Auslassende der Förderleitung 8, welches in den Verbrennungsraum 28 hineinragt. In Fig. 3A bis D sind dabei verschiedene Beispiele einer solchen Zuführlanze 29 dargestellt. Je nach Gegebenheiten kann der Querschnitt so ausgestaltet sein, dass eine optimale Materialzerkleinerung im Zuge des pneumatischen Transportierens und Einführens des Schlamms in den Verbrennungsraum 28 gelingt. Durch eine entsprechende Ausgestaltung des Querschnitts der Zuführlanze 29 kann die Auflösung der Materialpfropfen im Zuge des Eindringens in den Verbrennungsraum optimiert werden, so dass eine disperse Beschickung der Verbrennungseinrichtung erfolgt. Durch die entsprechende Ausgestaltung der Zuführlanze wird folglich der Effekt des Dispergierens erreicht bzw. optimiert.

Insgesamt liegt es im Rahmen der Erfindung, dass das Material im Sinne einer Pfropfenförderung bis zum Austritt in Pfropfenform transportiert und gegebenenfalls erst beim Austritt in die Verbrennungseinrichtung dispergiert wird. Alternativ liegt es jedoch auch im Rahmen der Erfindung, dass bereits in der Förderleitung eine Dispergierung der zunächst erzeugten Materialpfropfen erfolgt.

## Patentansprüche

1. Verfahren zur Verbrennung von pastösem Material, insbesondere von Klärschlamm, in einer Anlage mit einer Verbrennungseinrichtung (20), die einen Verbrennungsraum (28) aufweist, und mit einer Beschickvorrichtung (B), mit der der Verbrennungsraum (28) der Verbrennungseinrichtung (20) mit dem zu verbrennenden Material beschickt wird,
wobei die Beschickvorrichtung (B) als pneumatische Förder- und Beschickvorrichtung (B) ausgebildet ist, welche eine Exzenterschneckenpumpe (1) und eine pneumatische Förderleitung (8) für eine Materialpfropfenförderung aufweist,
wobei die Exzenterschneckenpumpe (1) einen Stator, einen in dem Stator (2) rotierenden Rotor (3), ein an den Stator (2) angeschlossenes Sauggehäuse (4) mit einer Einfüllöffnung (5) und eine Auslassöffnung (7) aufweist,
wobei die pneumatische Förderleitung (8) an die Auslassöffnung (7) der Exzenterschneckenpumpe (1) angeschlossen und das zu fördernde Material (M) mit der Exzenterschneckenpumpe (1) als verdichteter Materialstrang in die Förderleitung (8) gepresst wird,
wobei an die Förderleitung (8) über zumindest ein Ventil (11), eine Druckmedienzufuhr (10) angeschlossen ist, mit der in zeitlichen Abständen Druckpulse in die Förderleitung (8) injiziert werden, wobei mit den Druckpulsen von dem komprimierten Materialstrang Materialpfropfen (MP) begrenzter Länge abgetrennt und durch die Förderleitung (8) transportiert werden und
wobei die Förderleitung (8) einen Innendurchmesser (d) von maximal 50 mm aufweist und zur Beschickung der Verbrennungseinrichtung (20) mit den Materialpfropfen (MP) an den Verbrennungsraum (28) der Verbrennungseinrichtung (20) angeschlossen ist,
wobei die Druckpulse einen Druck von zumindest 4 bar aufweisen,
wobei die Materialpfropfen innerhalb der Förderleitung oder am Austrittsende der Förderleitung dispergiert werden und
wobei die Materialpfropfen als dispergiertes Material aus der Förderleitung pneumatisch in den Verbrennungsraum gedrückt werden.

2. Verfahren nach Anspruch 1, **dadurch gekennzeichnet, dass** die Verbrennungseinrichtung (20) als Verbrennungsofen, z. B. als Wirbelschichtofen, ausgebildet ist.

3. Verfahren nach Anspruch 1 oder 2, **dadurch gekennzeichnet, dass** die Förderleitung (8) einen Innendurchmesser (d) von 30 mm bis 50 mm aufweist.

4. Verfahren nach einem der Ansprüche 1 bis 3, **dadurch gekennzeichnet, dass** die Förderleitung (8) an die Auslassöffnung (7) der Exzenterschneckenpumpe über ein Adapterstück (8') angeschlossen ist, an welches zumindest die Druckmedienzufuhr (10) angeschlossen ist.

5. Verfahren nach einem der Ansprüche 1 bis 4, **dadurch gekennzeichnet, dass** die Förderleitung (8) mittels einer endseitigen Zuführlanze (29) an die Verbrennungseinrichtung (20) angeschlossen ist, wobei die Zuführlanze (29) in den Verbrennungsraum (28) mündet und vorzugsweise um ein vorgegebenes Maß (X) in den Verbrennungsraum (28) hineinragt.

6. Verfahren nach einem der Ansprüche 1 bis 5, mit einer Steuereinrichtung, die mit dem Ventil (11) der Druckmedienzufuhr (10) verbunden und mit der das Ventil (11) gesteuert wird.

7. Verfahren nach einem der Ansprüche 1 bis 6, **dadurch gekennzeichnet, dass** an die Förderleitung (8) eine Druckmesseeinrichtung (15) angeschlossen ist, die vorzugsweise mit der Steuereinrichtung verbunden ist, sodass das Ventil (11) in Abhängigkeit von dem mit der Druckmesseinrichtung (15) gemessenen Druck in der Förderleitung (8) gesteuert wird.

8. Verfahren nach einem der Ansprüche 1 bis 7, **dadurch gekennzeichnet, dass** an die Förderleitung (8) eine Hilfsmittelzufuhr (16) angeschlossen ist, z.B. eine Gleitmittelzufuhr, vorzugsweise zwischen Exzenterschneckenpumpe (1) und Druckmedienzufuhr (10), mit der ein Hilfsmittel, z.B. ein Gleitmittel, in die Druckleitung (8) bzw. in den Bereich des Materialstrangs injiziert wird.

9. Verfahren nach einem der Ansprüche 1 bis 8, **dadurch gekennzeichnet, dass** die Druckpulse einen Druck von zumindest 6 bar, bevorzugt 6 bar bis 12 bar aufweisen.

## Claims

1. A method for combusting paste-like material, particularly sewage sludge, in a plant having a combustion device (20), which has a combustion chamber (28), and having a feeding device (B), with which the combustion chamber (28) of the combustion device (20) is feeded with the material to be combusted,
wherein the feeding device (B) is designed as a pneumatic conveying and feeding device (B) which has a progressive cavity pump (1) and a pneumatic conveying pipe (8) for conveying material plugs,
wherein the progressive cavity pump (1) has a stator, a rotor (3) rotating in the stator (2), a suction housing (4), which is connected to the stator (2), having a filling opening (5) and an outlet opening (7),
wherein the pneumatic conveying pipe (8) is connected to the outlet opening (7) of the progressive cavity pump (1) and the material (M) to be conveyed is pressed as a compressed material strand into the conveying pipe (8) using the progressive cavity pump (1),
wherein a pressure medium supply (10) is connected to the conveying pipe (8) by means of at least one valve (11), using which pressure medium supply pressure pulses are injected into the conveying pipe (8) at time intervals, wherein material plugs (MP) of limited length are separated from the compressed material strand using the pressure pulses and transported through the conveying pipe (8), and
wherein the conveying pipe (8) has an internal diameter (d) of 50 mm maximum and is connected to the combustion chamber (28) of the combustion device (20) for feeding the combustion device (20) with the material plugs (MP),
wherein the pressure pulses have a pressure of at least 4 bar,
wherein the material plugs are dispersed inside the conveying pipe or at the outlet end of the conveying pipe, and
wherein the material plugs are pneumatically pushed out of the conveying pipe into the combustion chamber as dispersed material.

2. The method according to Claim 1, **characterized in that** the combustion device (20) is designed as a combustion furnace, e.g. as a fluidized bed furnace.

3. The method according to Claim 1 or 2, **characterized in that** the conveying pipe (8) has an internal diameter (d) of 30 mm to 50 mm.

4. The method according to one of Claims 1 to 3, **characterized in that** the conveying pipe (8) is connected to the outlet opening (7) of the progressive cavity pump by means of an adapter piece (8'), to which at least the pressure medium supply (10) is connected.

5. The method according to one of Claims 1 to 4, **characterized in that** the conveying pipe (8) is connected by means of an end-side supply lance (29) to the combustion device (20), wherein the supply lance (29) opens into the combustion chamber (28) and preferably protrudes by a predetermined dimension (X) into the combustion chamber (28).

6. The method according to one of Claims 1 to 5, having a control device which is connected to the valve (11) of the pressure medium supply (10) and with which the valve (11) is controlled.

7. The method according to one of Claims 1 to 6, **characterized in that** a pressure measuring device (15) is connected to the conveying pipe (8), which is preferably connected to the control device, so that the valve (11) is controlled depending on the pressure in the conveying pipe (8) that is measured using the pressure measuring device (15).

8. The method according to one of Claims 1 to 7, **characterized in that** an auxiliary agent supply (16), e.g. a lubricant supply, is connected to the conveying pipe (8), preferably between progressive cavity pump (1) and pressure medium supply (10), with which an auxiliary agent, e.g. a lubricant, is injected into the pressure line (8) or into the region of the material strand.

9. The method according to one of Claims 1 to 8, **characterized in that** the pressure pulses have a pressure of at least 6 bar, preferably 6 bar to 12 bar.

## Revendications

1. Procédé d'incinération de matière pâteuse, en particulier de boue d'épuration, dans une installation avec un dispositif d'incinération (20), qui comporte une chambre d'incinération (28), et avec un dispositif de charge (B), avec lequel la chambre d'incinération (28) du dispositif d'incinération (20) est chargée en matière à incinérer,
sachant que le dispositif de charge (B) est constitué sous la forme d'un dispositif de transport et de charge pneumatique (B), lequel comporte une pompe à vis excentrée (1) et une conduite de transport pneumatique (8) pour un transport d'amas de matière,
sachant que la pompe à vis excentrée (1) comporte un stator, un rotor (3) tournant dans le stator (2), un carter d'aspiration (4) raccordé au stator (2) avec une ouverture d'admission (5) et une ouverture d'évacuation (7),
sachant que la conduite de transport pneumatique (8) est raccordée à l'ouverture d'évacuation (7) de la pompe à vis excentrée (1) et la matière à transporter (M) est compressée dans la conduite de transport (8) avec la pompe à vis excentrée (1) sous la forme d'un boudin de matière compacté,
sachant qu'une alimentation en milieu comprimé (10) est raccordée à la conduite de transport (8) par au moins une soupape (11) avec laquelle des impulsions de pression sont injectées dans la conduite de transport (8) à des intervalles de temps, sachant que des amas de matière (MP) de longueur limitée sont séparés du boudin de matière comprimé et sont transportés par la conduite de transport (8), et
sachant que la conduite de transport (8) comporte un diamètre intérieur (d) de 50 mm maximum et est raccordée pour charger le dispositif d'incinération (20) en amas de matière (MP) à la chambre d'incinération (28) du dispositif d'incinération (20),
sachant que les impulsions de pression comportent une pression d'au moins 4 bars,
sachant que les amas de matière sont dispersés à l'intérieur de la conduite de transport ou à l'extrémité de sortie de la conduite de transport, et
sachant que les amas de matière sont poussés pneumatiquement sous forme de matière dispersée de la conduite de transport dans la chambre d'incinération.

2. Procédé selon la revendication 1, ***caractérisé en ce que*** le dispositif d'incinération (20) est constitué sous la forme d'un four d'incinération, par ex. : sous la forme d'un four à lit fluidisé.

3. Procédé selon la revendication 1 ou 2, ***caractérisé en ce que*** la conduite de transport (8) comporte un diamètre intérieur (d) de 30 mm à 50 mm.

4. Procédé selon l'une quelconque des revendications 1 à *3,* ***caractérisé en ce que*** la conduite de transport (8) est raccordée à l'ouverture d'évacuation (7) de la pompe à vis excentrée par le biais d'un adaptateur (8') auquel est raccordée au moins l'alimentation en milieu sous pression (10).

5. Procédé selon l'une quelconque des revendications 1 à *4,* ***caractérisé en ce que*** la conduite de transport (8) est raccordée au dispositif d'incinération (20) au moyen d'une lance d'alimentation (29) en extrémité, sachant que la lance d'alimentation (29) débouche dans la chambre d'incinération (28) et dépasse de préférence d'une mesure prédéfinie (X) dans la chambre d'incinération (28).

6. Procédé selon l'une quelconque des revendications 1 à 5, avec un système de commande, qui est relié à la soupape (11) de l'alimentation de milieu sous pression (10) et avec lequel la soupape (11) est commandée.

7. Procédé selon l'une quelconque des revendications 1 à *6, **caractérisé en ce qu**'*un dispositif de mesure de pression (15) est raccordé à la conduite de transport (8), qui est relié de préférence au système de commande de telle manière que la soupape (11) est commandée en fonction de la pression mesurée avec le système de mesure de pression (15) dans la conduite de transport (8).

8. Procédé selon l'une quelconque des revendications 1 à 7, **caractérisé en ce qu'**une alimentation de milieu auxiliaire (16) est raccordée à la conduite de transport (8) à par ex. : une alimentation de lubrifiant, de préférence entre une pompe à vis excentrée (1) et une alimentation à milieu sous pression (10), avec laquelle, un milieu auxiliaire, par ex. : un lubrifiant, est injecté dans la conduite sous pression (8) ou dans la zone du boudin de matière.

9. Procédé selon l'une quelconque des revendications 1 à *8,* ***caractérisé en ce que*** les impulsions de pression comportent une pression d'au moins 6 bars, de préférence 6 bars à 12 bars.
